# EUROPEAN PATENT APPLICATION

(11) **EP 1 695 651 A2**
(43) Date of publication of application: **30.08.2006**
(21) Application number: 05356172.6
(22) Date of filing: 26.09.2005
(51) Int. Cl.: A47L 9/04

(54) **A brush assembly for a vacuum cleaner**

(30) Priority: 23.02.2005 KR 2005015074
(71) Applicant: Samsung Gwangju Electronics Co., Ltd., Gwangju-city (KR)
(72) Inventor: Kim, Hwa-joong, Buk-gu Gwangju-city (KR); Uratani, Hiroyuki, Gwangsan-gu Gwangju-city (KR)
(74) Representative: Myon, Gérard Jean-Pierre

(57) **Abstract**

A brush assembly comprises a body (110) having a dirt suction port (111) formed thereon, a cover (140) connected with an upper portion of the body to form a suction passage (S₁) and a turbine chamber (S₂), a turbine (130) mounted in the turbine chamber (S₂), and a brush drum (120) being rotated by a rotational force received from the turbine. The turbine chamber and the suction passage are partitioned from each other, and the turbine is rotated by an air drawn in through an air suction port (141a, 142a) which is separated from the dirt suction port. Accordingly, the turbine is prevented from being clogged by dirt, dust or hair.

## Description

### BACKGROUND OF THE INVENTION

### 1. Field of the Invention

The present invention relates to a brush assembly for a vacuum cleaner.

### 2. Description of the Related Art

In general, a brush assembly for a vacuum cleaner rotates a brush drum in contact with a cleaning surface, removes dirt from the cleaning surface by scrubbing and hitting, and draws in the dirt.

There are suggested two methods to rotate the brush drum of the brush assembly. One is that a driving motor is provided in the brush assembly to rotate the brush drum. The other is that the brush drum is rotated by a kinetic energy of drawn-in air.

Currently, the method of using the kinetic energy of air is preferred because the installing of the driving motor results in a complicated structure of the brush assembly and an increased cost. One example thereof is disclosed in U.S. Patent No. 5,701,633.

In detail, a turbine is provided in a suction passage. Air that is drawn into a brush assembly rotates the turbine and a brush drum connected to the turbine such that the brush drum removes dirt from a cleaning surface by scrubbing and hitting.

However, since the turbine is exposed to the dirt-laden air in the suction passage, big-sized dirt or large amount of dirt may clog the turbine. In this case, the turbine is not smoothly rotated, and in the worse case, the suction passage may be also clogged. Therefore, cleaning efficiency deteriorates. This becomes more problematic when a pet brush is used to groom hair of pets.

Also, since a blade is formed from a center of the turbine, there is no gap between the center of the turbine and the blade so that the air is not able to be guided to the center. When air collides with the blade, the air is not guided to the center but is scattered. As a result, a kinetic energy of the air is not sufficiently transmitted to the next blade, which causes a low rotational force of the turbine.

### SUMMARY OF THE INVENTION

The present invention has been developed in order to solve the above problems in the related art. Accordingly, an aspect of the present invention is to provide a brush assembly capable -of preventing a turbine from being clogged by dirt regardless of the size or amount of dirt.

Another aspect of the present invention is to provide a brush assembly capable of sufficiently transmitting a kinetic energy of air to a turbine.

The above aspects are achieved by providing a brush assembly comprisinga body having a dirt suction port formed thereon, a cover connected with an upper portion of the body to form a suction passage and a turbine chamber, a turbine mounted in the turbine chamber, and a brush drum being rotated by a rotational force received from the turbine. The turbine chamber and the suction passage are partitioned from each other, and the turbine is rotated by an air drawn in through an air suction port, which is separated from the dirt suction port. The air suction port may be formed on the cover to prevent a dirt from being drawn therethrough. Since the turbine is rotated by the air drawn in through the air suction port, which is separated from the dirt suction port, the turbine is prevented from being clogged by dirt, dust or hair.

The cover may comprise a first cover and a second cover, and the air suction port comprises a first air suction port formed on the first cover and a second air suction port formed on the second cover. The second cover may be made of transparent material to allow a user to check an inside of the second cover.

The brush assembly may further comprise a partition member for forming the suction passage and the turbine chamber.

The partition member may be removably mounted in the body. Accordingly, easy cleaning of the partition member is achieved.

The turbine may comprise a base plate; and a plurality of blades protruding from the base plate. The blades are arranged on an upper surface of the base plate except for a center of the base plate in a radial direction. Each blade may have a cutting portion formed on a side thereof to guide the air colliding with the blade to the center. Accordingly, a kinetic energy of the drawn-in air is effectively transmitted to the turbine.

### BRIEF DESCRIPTION OF THE DRAWINGS

The above aspects and other advantages of the present invention become apparent by describing an embodiment of the present invention with reference to the accompanying drawings, in which:

FIG 1 is a perspective view showing a vacuum cleaner employing a brush assembly according to an embodiment of the present invention;

FIG. 2 is an exploded perspective view showing the brush assembly of FIG 1;

FIG. 3A is a front view showing a turbine of FIG. 2;

FIG. 3B is a side view showing the turbine of FIG. 2;

FIG. 4 is a partial cutaway view of the brush assembly and an extension pipe, taken along line IV-IV of FIG. 1; and

FIG. 5 is a partial cutaway view of the brush assembly and the extension pipe, taken along line V-V of FIG. 1.

In the drawings, it should be understood that like reference numerals refer to like features and structures.

### DETAILED DESCRIPTION OF AN EXEMPLARY EMBODIMENT

Hereinafter, an embodiment of the present invention will now be described in greater detail with reference to the accompanying drawings.

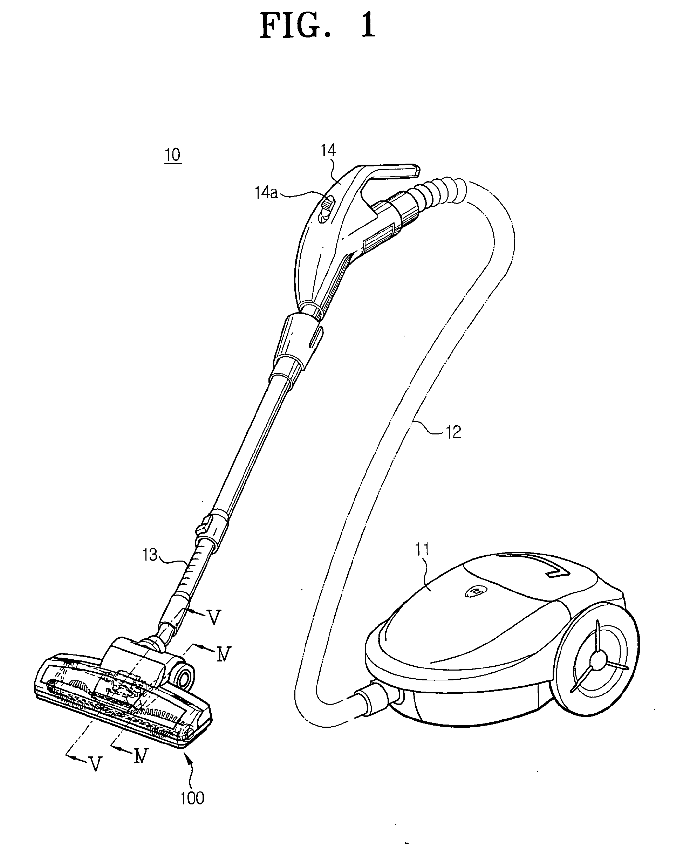

FIG 1 is a perspective view showing a vacuum cleaner 10 employing a brush assembly 100 according to an embodiment of the present invention. Referring to FIG 1, the vacuum cleaner 10 comprises a cleaner body 11 in which a suction motor (not shown) and a dust-collecting chamber (not shown) are provided, the brush assembly 100 for scrubbing and hitting dirt adhered to a cleaning surface and drawing in the dirt therethrough, an extension pipe 13 and a flexible hose 12 connecting the cleaner body 11 and the brush assembly 100, and a manipulation part 14 for manipulating the vacuum cleaner 10.

According to the above-described construction, when a user turns on a switch 14a of the manipulation part 14, the suction motor in the cleaner body 11 is driven so as to generate a suction force. Due to the suction force, dirt is drawn into the dust-collecting chamber (not shown) of the cleaner body 11 from a cleaning surface through the brush assembly 100, the extension pipe 13 and the flexible hose 12. During this process, the brush assembly 100 scrubs and hits dirt adhered to the cleaning surface, thereby removing the dirt.

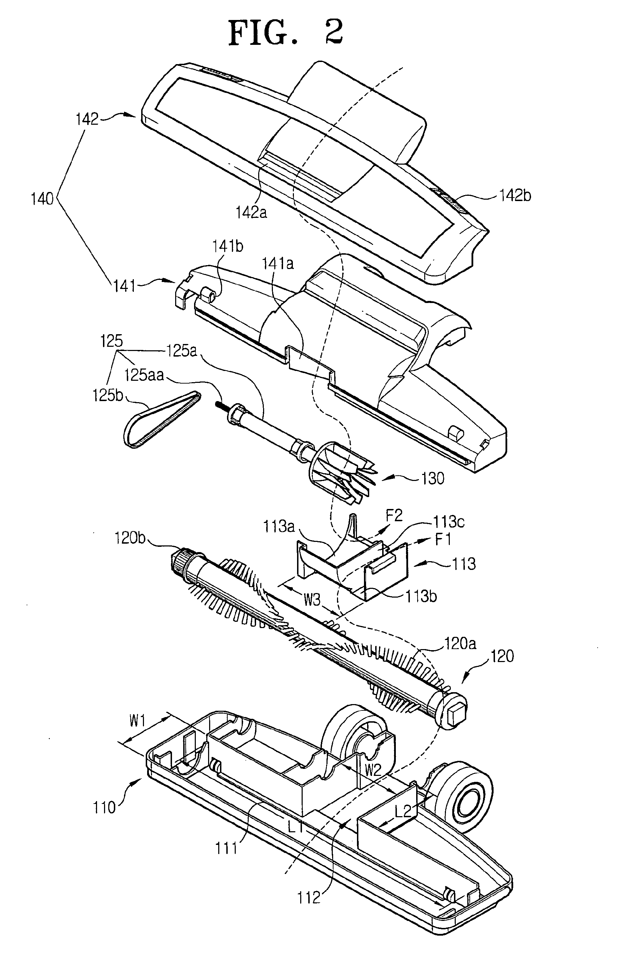

Referring to FIG 2, the brush assembly 100 comprises a body 110, a partition member 113, a brush drum 120, a force-transmitting member 125, a turbine 130, and a cover 140.

The body 110 is a lower frame of the brush assembly 100 and faces a cleaning surface to draw in dirt. The body 110 is provided with a dirt suction port 111, through which dirt is drawn in, and a connection part 112.

The dirt suction port 111 is a rectangular slit formed on a front end of the body 110 and having a length L1 and a width W1. Dirt is drawn into the brush assembly 100 through the dirt suction port 111 from a cleaning surface.

The connection part 112 is a rectangular passage formed on a rear side of the body 110 and having a length L2 and a width W2. A front end of the connection part 112 is connected to the dirt suction port 111 and a rear end is connected to the extension pipe 13 (see FIG. 1).

The partition member 113 comprises a first chamber 113a and a second chamber 113b, which are partitioned from each other by a partition 113c. The partition member is removably mounted in the body 110. More specifically, the partition member 113 is removably mounted in the connection part 112. For this, the partition member 113 has a width W3 smaller than the width W2 of the connection part 112.

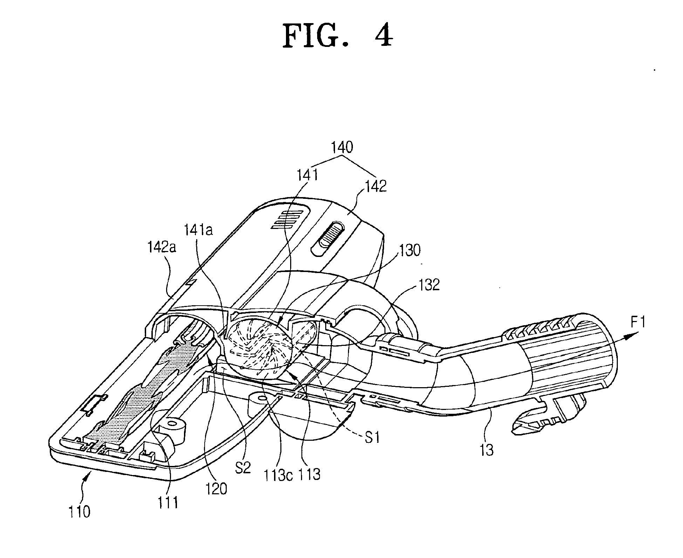

The first chamber 113a has a rounded bottom to receive the turbine 130 and forms a turbine chamber S2 (see FIG 4) in cooperation with a first cover 141 covering the first chamber 113a.

The second chamber 113b is a flat bottom so that the air is less likely subjected to a resistance. The second chamber 113b forms a suction passage S1 (see FIG 4) in cooperation with the first cover 141 covering the second chamber 113b.

Since the turbine chamber S2 (see FIG. 4) and the suction passage S1 (see FIG 4) are partitioned from each other by the partition 113c, air that has been drawn in through a second air suction port 142a and a first air suction port 141a passes through the turbine chamber S2 (see FIG 4) in an arrow direction F2, whereas dirt-entrained air that has been drawn in through the dirt suction port 111 passes through the suction passage S1 (see FIG 4) in an arrow direction F1. Accordingly, the dirt-entrained air does not flow into the turbine chamber S2 (see FIG 4) and thus, the turbine 130 is prevented from being clogged by dirt.

The brush drum 120 is rotatably located in the dirt suction port 111 of the body 110. The brush drum 120 scrubs and hits various dirt existing on a cleaning surface, thereby removing the dirt from the cleaning surface. For this, bristles 120a are press-fitted or attached to a surface of the brush drum 120. The brush drum 120 has a first gear 120b formed on an end thereof to receive a rotational force from the turbine 130 through a belt 125b.

The force-transmitting member 125 comprises a rotary shaft 125a and the belt 125b to transfer the rotational force from the turbine 130 to the brush drum 120.

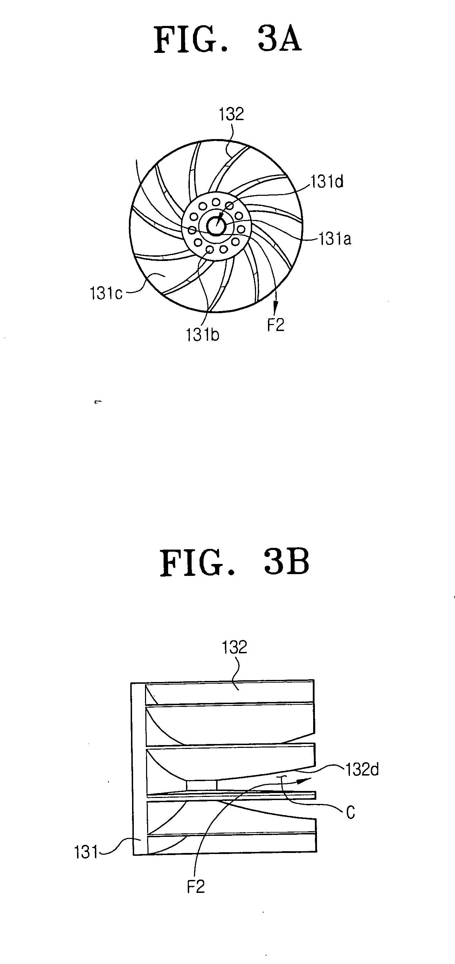

The rotary shaft 125a is inserted into a shaft hole 131a (see FIG 3A) of the turbine 130 and transfers the rotational force from the turbine 130 to the belt 125b. For this, the rotary shaft 125a has a second gear 125aa formed on an end thereof, and the belt 125b is engaged with the second gear 125aa.

The belt 125b transmits the rotational force of the rotary shaft 125a to the brush drum 120, and for this, the belt 125b is engaged with both the first gear 120b of the brush drum 120 and the second gear 125aa of the rotary shaft 125a. Alternatively, the second gear 125aa of the rotary shaft 125a is directly engaged with the first gear 120b of the brush drum 120 without the belt 125b to transmit the rotational force directly from the turbine 130 to the brush drum 120.

Referring to FIGS. 3A and 3B, the turbine 130 is rotatably disposed in the turbine chamber S2 (see FIG 4) and comprises a base plate 131 and blades 132.

The base plate 131 is a circular supporting frame. The shaft hole 131a is defined on a center of the base plate 131 so that the rotary shaft 125a (see FIG 2) is inserted into the shaft hole 131a. Eleven noise reducing holes 131b perforate around the shaft hole 131a at predetermined intervals to reduce a weight of the base plate 131 and absorb noise.

The blades 132 protrude from the base plate 131. In this embodiment, eleven blades 132 are arranged on an upper surface 131c of the base plate 131 except for a center C in a radial direction. The center C is a space surrounded by the blades 132. That is, the blades 132 protrude from the upper surface 131c of the base plate 131 1 except for a core 131d along a circumferential direction, and the center C is formed by the arrangements of the blades 132.

Each blade 132 has a cutting portion 132d formed by chamfering an end of the blade 132 so that the air colliding with the blades 132 is guided to the center C of the turbine 130 in the arrow direction F2.

The blades 132 are arranged on the upper surface 131c of the base plate 131 except for the core 131d and each have the cutting portion 132d. Accordingly, when air collides with a certain blade 132, the air is guided to the center C of the turbine 130 along the cutting portion 132d in the arrow direction F2. As a result, a kinetic energy of the air is sufficiently transmitted to the next blade 132, increasing the rotational force and efficiency of the turbine 130.

Referring to FIG 4, the upper cover 140 covers the body 110 to form the suction passage S1 and the turbine chamber S2. For this, the cover 140 includes the first cover 141 and the second cover 142.

The first cover 141 is connected with an upper portion of the body 110 to form the suction passage S 1 and the turbine chamber S2 in a space between the body 110 and the cover 140.

The suction passage S 1 is formed in the brush assembly 100 to allow dirt drawn into the brush assembly 100 to flow to the extension pipe 13.

The suction passage S 1 is formed by the aforementioned the second chamber 113b (see FIG. 2), the first cover 141 covering the upper portion of the second chamber 113b, the body 110, and the second cover 142 covering the body 110, and the suction passage S1 fluidly communicates with the extension pipe 13. According to the above construction, the dirt adhered to the cleaning surface is drawn into the extension pipe 13 through the dirt suction port 111 and the suction passage S 1 in the arrow direction F1.

The turbine 130 is rotatably mounted in the turbine chamber S2, and the turbine chamber S2 is a space formed by the first chamber 113a (see FIG 2) of the partition member 113 and the first cover 141 covering the first chamber 113a.

Alternatively, the suction passage S1 and the turbine chamber S2 are formed integrally with the body 110 without the partition 113. However, it is preferable to form the suction passage S1 and the turbine chamber S2 by using the partition 113 fabricated separately like in the above-described embodiment for the purpose of easy assembly and maintenance.

The first air suction port 141a is formed on the first cover 141 in order for air other than the air drawn into the suction passage S1 to rotate the turbine 130. The first air suction port 141a fluidly communicates with the turbine chamber S2 so that the air drawn in through the first air suction port 141a rotates the turbine 130. Accordingly, the turbine 130 is not subject to a rotational force generated by the air that has passed through the suction passage S1.

The second cover 142 forms the suction passage S 1 in cooperation with the body 110. The second air suction port 142a is formed on an upper surface of the second cover 142 and fluidly communicates with the first air suction port 141 a.

The second cover 142 is connected with the first cover 141 by two mounting switches 142b (see FIG. 2) disposed on opposite sides of the second cover 142. The first cover 141 has connection recesses 141b (see FIG 2) formed on positions corresponding to the mounting switches 142b (see FIG 2) to be connected with the mounting switches 142b (see FIG. 2). The second cover 142 is made of transparent material to allow a user to check the rotational state of the brush drum 120.

Hereinafter, the operation of the brush assembly 100 as constructed above will now be described.

Referring to FIG. 4, dirt is drawn into the brush assembly 100 through the dirt suction port 111 in the arrow direction F1 by a suction force of a suction force source (not shown). The drawn-in dirt flows into the extension pipe 13 through the suction passage S1, passes through the flexible hose 12 (see FIG 1) and is collected in the dust chamber (not shown) of the cleaner body 11 (see FIG 1). The dirt entrained in the air flows in the arrow direction F1 and does not flow into the turbine chamber S2 since the turbine chamber S2 is partitioned from the suction passage S 1.

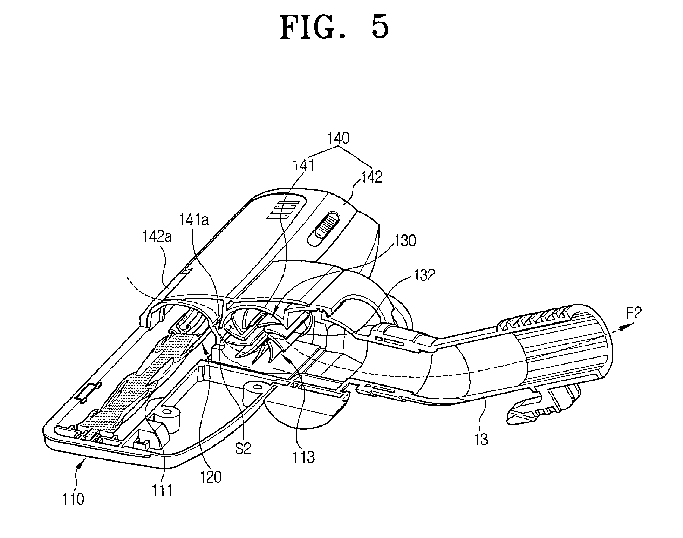

Referring to FIG. 5, the turbine 130 is rotated by the air drawn through the second air suction port 142a and the first air suction port 141 a in the arrow direction F2 by the suction force of the suction force source (not shown). When drawn-in air collides with a certain blade 132, the air is guided to the center C (see FIG 3B) along the cutting portion 131a (see FIG 3B), and then collides with the next blade 132. Consequently, the turbine 130 is subject to the more powerful rotational force.

The rotational force of the turbine 130 is transmitted to the brush drum 120 through the rotary shaft 125a (see FIG 2) and the belt 125b (see FIG. 2), thereby rotating the brush drum 120. The bristles 120a (see FIG 2) disposed on the surface of the brush drum 120 scrub and hit the dirt adhered to the cleaning surface to remove the dirt. Referring to FIG 4, the removed dirt flows into the extension pipe 13 through the suction passage S1 in the arrow direction F1, passes through the flexible hose 12 (see FIG 1) and then is collected in the dust chamber (not shown) of the cleaner body 11 (see FIG 1).

The brush assembly 100 according to the embodiment of the present invention has following advantages.

First, since the turbine chamber S2 is partitioned from the suction passage S1, the dirt flows through the suction passage S 1 and does not flow into the turbine chamber S2. Therefore, the dirt does not clog the turbine 130 mounted in the turbine chamber S2 and thus, the turbine 130 is smoothly rotated and cleaning efficiency is improved.

Second, since the blades 132 are arranged on the upper surface 131c of the base plate 131 except for the center C of the base plate 131, when the air collides with a certain blade 132, the air is guided to the center C of the turbine 130 so that the kinetic energy of the air is transmitted to the next blade 132. Accordingly, the rotational force of the turbine 130 increases and cleaning efficiency is improved.

The foregoing embodiments and advantages are merely exemplary and are not to be construed as limiting the present invention. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. A brush assembly (100) comprising:
a body (110) having a dirt suction port (111) formed thereon;
a cover (140) connected with an upper portion of the body to form a suction passage (S₁) and a turbine chamber (S₂) ;
a turbine (130) mounted in the turbine chamber (S₂) ; and
a brush drum (120) being rotated by a rotational force received from the turbine,
wherein the turbine chamber and the suction passage are partitioned from each other, and the turbine is rotated by an air drawn in through an air suction port (141 a, 142a) which is separated from the dirt suction port (111).

2. The brush assembly as claimed in claim 1, wherein the air suction port (141a, 142a) is formed on the cover (140) to prevent a dirt from being drawn therethrough.

3. The brush assembly as claimed in claim 2, wherein the cover (140) comprises a first cover (141) and a second cover (142), and the air suction port comprises a first air suction port (141a) formed on the first cover and a second air suction port (142a) formed on the second cover.

4. The brush assembly as claimed in claim 3, wherein the second cover (142) is made of transparent material to allow a user to check an inside of the second cover.

5. The brush assembly as claimed in claim 2, further comprising a partition member (113) for forming the suction passage (S₁) and the turbine chamber (S₂).

6. The brush assembly as claimed in claim 5, wherein the partition member (113) is removably mounted in the body (110).

7. The brush assembly as claimed in claim 1, wherein the turbine (130) comprises :
a base plate (131) ; and
a plurality of blades (132) protruding from the base plate, wherein the plurality of blades are arranged on an upper surface (131c) of the base plate except for a center (C) of the base plate in a radial direction.

8. The brush assembly as claimed in claim 7, wherein each blade of the plurality of blades (132) has a cutting portion (132d) formed on a side thereof to guide the air colliding with each blade to the center (C).

9. A brush assembly comprising:
a suction passage (S₁) for dirt-entrained air ;
a turbine chamber (S₂) for clean air ;
a brush drum (120) in fluid communication with said suction passage (S₁) ;
a turbine (130) mounted in the turbine chamber so that said clean air generates a rotational force on said turbine without exposing said turbine to said dirt-entrained air; and
a force-transmitting member (125) for transmitting said rotational force from said turbine (130) to said brush drum (120).

10. The brush assembly as claimed in claim 9, wherein said turbine (130) comprises a base plate (131) and a plurality of blades (132) protruding from said base plate, wherein said plurality of blades are arranged on an upper surface (131c) of said base plate except for a center (C) of said base plate in a radial direction.

11. The brush assembly as claimed in claim 9, wherein said force-transmitting member (125) comprises a first gear (120b) disposed on said brush drum (120), a shaft (125a) depending from said turbine (130), and a second gear (125aa) disposed on said shaft.

12. The brush assembly as claimed in claim 11, further comprising a belt (125b) engaged with said first and second gears (120b, 125aa).

13. The brush assembly as claimed in claim 11, wherein said first and second gears are engaged to one another.

14. A brush assembly comprising:
a body (110) having a dirt suction port (111) for dirt-laden air;
a cover (140) having an air suction port (141a, 141b) for clean air, said cover being removably connected to said body to define a space (S₁, S₂) therebetween ;
a partition member (113) removably mounted in said space to defme a first chamber (113a) and a second chamber (113b), said first and second chambers being partitioned from one another so that said dirt-laden air passes through said second chamber (113b) while said clean air passes through said first chamber (113a) ;
a turbine (130) mounted in said first chamber (113a) so that said clean air rotates said turbine ;
a brush drum (120) rotatably located in said dirt suction port (111) ; and
a force-transmitting member (125) for transmitting rotation of said turbine (130) to said brush drum (120).

15. The brush assembly as claimed in claim 14, wherein said force-transmitting member (125) comprises a first gear (120b) disposed on said brush drum (120), a shaft (125a) depending from said turbine (130), and a second gear (125aa) disposed on said shaft.

16. The brush assembly as claimed in claim 15, further comprising a belt engaged with said first and second gears (120b, 125aa).

17. The brush assembly as claimed in claim 15, wherein said first and second gears are engaged to one another.
